# EUROPEAN PATENT APPLICATION

(11) **EP 1 749 846 A1**
(43) Date of publication of application: **07.02.2007**
(21) Application number: 05745926.5
(22) Date of filing: 26.05.2005
(51) Int. Cl.: C08G 63/183, C08G 63/91, C08L 67/00

(54) **POLYESTER RESIN FOR COMPRESSION MOLDING AND PROCESS FOR PRODUCING THE SAME, AND PROCESS FOR PRODUCING PREFORM**

(30) Priority: 26.05.2004 JP 2004155734; 09.11.2004 JP 2004325006
(71) Applicant: TOYO SEIKAN KAISHA, LTD., Tokyo 100-0011 (JP)
(72) Inventor: KITANO, Y., Toyo Seikan Group Corp. R&D Develop., Yokohama-shi, Kanagawa 2400062 (JP); KIKUCHI, A., Toyo Seikan Group Corp. R&D Develop., Yokohama-shi, Kanagawa 2400062 (JP)
(74) Representative: Manley, Nicholas Michael
(86) International application number: PCT/JP2005/010100
(87) International publication number: WO 2005/116107

(57) **Abstract**

A polyester resin suitably used for forming preforms by compression forming, the polyester resin having an intrinsic viscosity of 0.70 to 1.00 dL/g and, a molecular weight distribution (Mz/Mn) of not smaller than 3.0, and a diethylene glycol content of not larger than 2.3 mol%. The polyester resin is effectively prevented from depositing on conveyer means of the synthetic resin feeding device, the timing of falling the molten resin mass onto the compression forming mold is not deviated and, besides, the resin can be extruded in an increased amount from the extruder without accompanied by an excess increase in the torque of the extruder. Therefore, the preforms can be formed by compression forming maintaining good productivity. Besides, since the resin has a high degree of fluidity, the preforms that are the formed articles are free of wrinkles, shade or forming distortion, featuring good formability.

## Description

### (Technical Field)

The present invention relates to a polyester resin for compression forming and, more specifically, to a polyester resin for compression forming which contains less components that cause the resin to deposit on means for feeding a molten resin mass to a compression forming machine and can be smoothly fed to the compression-forming machine, and to a method of producing preforms featuring excellent productivity.

### (Background Art)

Containers formed by using a synthetic resin such as polyethylene terephthalate have been widely used for containing beverages, the containers being obtained by, first, forming a preform with bottom by injection-forming a synthetic resin, pre-heating the preform to a drawing temperature thereof, pull-drawing the preform in the axial direction in a blowing metal mold, and blow-drawing the preform in the circumferential direction (for example, see JP-A-4-154535).

It has further been known to produce the preform by compression-forming a resin since the residence time in the forming machine is short, the resin deteriorates little and no gate portion is existing in the bottom portion. For example, there has been proposed a method of producing a preform comprising a step of extruding a molten thermoplastic resin and cutting it into a molten mass of nearly a constant amount, a step of feeding the molten mass into the metal mold by arranging a male mold and a female mold so as to move relative to each other, a step of compression-forming the molten mass into a formed article having a body wall with bottom and a mouth portion, and a step of cooling and solidifying the compression-formed article and discharging the formed article out of the metal mold (JP-A-2000-25729).

In forming the preform by the compression forming, the synthetic resin must be fed to female mold means or to male mold means prior to specifying a space of forming mold between the male mold means and the female mold means by closing them. To feed the synthetic resin, there has been proposed, for example, a synthetic resin feeding device which holds the synthetic resin in its molten state separated away from an extrusion port of an extrusion nozzle and conveys it up to a required portion of the forming machine (JP-A-2000-280248).

### (Disclosure of the Invention)

In feeding a molten mass of an ordinary polyester resin such as polyethylene terephthalate to a compression forming machine by using the above-mentioned synthetic resin feeding device, however, when the time elapses to some extent after the start of the operation, it often happens that the molten resin mass cannot be reliably fed to the compression forming machine. That is, in forming a preform of a polyester resin by compression forming, a deposit builds up on holding means (holder) that holds the molten resin mass in the feeding device and on guide means (throat) that is a guide from the molding means to the compression-forming mold as the molten resin mass comes in contact therewith an increased number of times. Therefore, when the time elapses to some extent from the start of operation of the forming machine, the molten resin mass is caught by the deposit that has built up, whereby the molten resin mass falls at a varying timing which is out of the preset timing of the compression forming machine, and the molten resin mass cannot be reliably fed into the compression-forming mold.

The inventors have investigated the cause and have discovered that when the time elapses to some extent from the start of operation of the forming machine in continuously forming the preforms by compression forming, particular components adhere and build up on the molding means (holder) for holding the molten resin mass in the synthetic resin feeding device and on the guide means (throat) for guiding the molten resin mass into the compression-forming mold, interrupting the fall of molten resin mass and varying the timing of fall of the molten resin mass.

It is, therefore, an object of the present invention to provide a polyester resin for compression forming capable of suppressing the building-up of deposits on conveyer means such as holding means and guide means of the synthetic resin feeding device, and of feeding a molten resin mass thereof to the compression-forming machine maintaining stability for extended periods of time.

Another object of the present invention is to provide a polyester resin for compression forming, which comprises a general-purpose polyester resin, and is capable of forming a preform by compression forming maintaining good formability and productivity without causing the above-mentioned problems, and a method of producing the same.

A further object of the present invention is to provide a production method capable of forming preforms maintaining good productivity by feeding a molten resin mass to the compression forming machine maintaining stability for extended periods of time without building up deposits on the conveyer means such as holding means and guide means in the synthetic resin feeding device.

According to the present invention, there is provided a polyester resin for compression forming having an intrinsic viscosity of 0.70 to 1.00 dL/g, a molecular weight distribution (Mz/Mn) of not smaller than 3.0, and a diethylene glycol content of not larger than 2.3 mol%.

It is desired that the polyester resin for compression forming of the present invention:
1. Contains components of molecular weights of not smaller than an inter-tangling-point polymerization degree (entanglement molecular weight) in an amount of not smaller than 20% by weight; and
2. Contains the low molecular components having weight average molecular weights in a range of 500 to 2000 in an amount of not larger than 1.1% by weight.

According to the present invention, further, there is provided a method of producing a polyester resin for compression forming, comprising melt-kneading a polyester A having an intrinsic viscosity of 0.60 to 0.79 dL/g and a molecular weight distribution (Mz/Mn) of 2.50 to 3.50 and a polyester resin B having an intrinsic viscosity of 0.80 to 1.30 dL/g and a molecular weight distribution (Mz/Mn) of 2.80 to 4.00 in such a combination that a difference in the intrinsic viscosity between the polyester resin A and the polyester resin B is not smaller than 0.15.

In the method of producing the polyester resin for compression forming of the present invention, it is desired that the polyester resin A and the polyester resin B are used at a weight ratio of 5:95 to 95:5.

According to the present invention, further, there is provided a method of producing preforms by compression-forming a molten resin mass of a polyester resin obtained by melt-kneading a polyester A having an intrinsic viscosity of 0.60 to 0.79 dL/g and a molecular weight distribution (Mz/Mn) of 2.50 to 3.50 and a polyester resin B having an intrinsic viscosity of 0.80 to 1.30 dL/g and a molecular weight distribution (Mz/Mn) of 2.80 to 4.00 in such a combination that a difference in the intrinsic viscosity between the polyester resin A and the polyester resin B is not smaller than 0.15.

According to the polyester resin for compression forming of the present invention, an important feature resides in that an intrinsic viscosity thereof is 0.70 to 1.00 dL/g and, particularly, 0.73 to 0.90 dL/g, the molecular weight distribution (Mz/Mn) is not smaller than 3.0 and, particularly, in a range of 3.0 to 3.5, and the diethylene glycol content is not larger than 2.3 mol% and, particularly, in a range of 1.3 to 2.2 mol%.

In the present invention, since the intrinsic viscosity is 0.70 to 1.00 dL/g, the molecular weight distribution (Mz/Mn) is not smaller than 3.0, and the diethylene glycol content is not larger than 2.3 mol%, the resin is effectively prevented from depositing on the conveyer means of the synthetic resin feeding device used at the time of compression forming, the timing of falling the molten resin mass onto the compression forming mold is not varied and, besides, the resin can be extruded in an increased amount from the extruder without accompanied by an excess increase in the torque of the extruder. Therefore, the preform can be formed by compression forming maintaining good productivity. Besides, since the resin has a high degree of fluidity, the preform that is the formed article is free of wrinkles, shade or forming distortion, featuring good formability.

The present inventors have discovered that the components of high molecular weights of not greater than an inter-tangling-point polymerization deposit and build up on the conveyer means via monomer components and oligomer components in the polyester resin interrupting the molten resin mass of the polyester resin from smoothly falling. It is, therefore, desired to decrease these components from the standpoint of improving conveyance of the molten resin mass of the polyester resin. Generally, however, the resin containing components of molecular weights greater than the inter-tangling-point polymerization degree in large amounts, has a high melt viscosity and poor compression formability. According to the present invention, it was attempted to contain components of high molecular weights in large amounts while broadening the molecular weight distribution, and made it possible to obtain a polyester resin having an intrinsic viscosity over a range of 0.70 to 1.00 dL/g without impairing the conveyance of the molten resin mass, and improving formability, productivity and economical advantage.

The molecular weight distribution (Mz/Mn) specified by the present invention particularly expresses the effect of distribution of high molecular components in the polyester resin. With the molecular weight distribution (Mz/Mn) being not smaller than 3.0 and, particularly, lying in a range of 3.0 to 3.5, the polyester resin of the invention contains components of high molecular weights greater than the inter-tangling-point polymerization in amounts larger than those of general polyester resins having intrinsic viscosities lying in the above range and contains in small amounts the monomer components, ologomer components and components of high molecular weights smaller than the inter-tangling-point molecular weight that become a cause of deposition on the conveyer means. Therefore, the polyester resin of the present invention features excellent conveyance of the molten resin mass thereof.

In the present invention, further, it is also important that the amount of the diethylene glycol (hereinafter also referred to as DEG) is not larger than 2.3 mol% and, particularly, from 1.3 to 2.2 mol%. When the amount of DEG is not smaller than 2.3 mol%, the molten resin mass is conveyed poorly even when the molecular weight distribution and the intrinsic viscosity are within the above-mentioned ranges. The reason is not clear why the content of DEG affects the conveyance of the molten resin mass. It is, however, considered that the DEG has poor heat stablity permitting the molecular chain thereof to be easily cut. As a result, if the content of DEG is too great, the content of the low molecular components increases. Besides, if the content of DEG increases, the melting point of the polyester resin decreases and, accordingly, the viscosity of the resin increases at a temperature of extruding the molten resin mass.

The above action and effect of the present invention will become obvious from the results of Examples appearing later. That is, when the polyester resin has an intrinsic viscosity of 0.7 to 1.00 dL/g, a molecular weight distribution (Mz/Mn) of not smaller than 3.0 and a diethylene glycol content of not larger than 2.3 mol%, the molten resin does not deposit on the holder. Besides, even after the passage of a predetermined period of time, the timing of fall of the molten resin mass does not vary and excellent formability and productivity are maintained (Examples 1 to 9). When the polyester resin has an intrinsic viscosity smaller than the above range, however, there takes place the draw-down of the molten resin and, besides, the molten resin mass cannot be efficiently formed (Comparative Examples 2 and 8). Further, when the polyester resin has an intrinsic viscosity larger than the above range, the productivity becomes inferior to those having the intrinsic viscosities lying in the above range though the molten resin does not deposit on the holder. When the intrinsic viscosity is too great, it is obvious that distortion takes place during the forming (Comparative Examples 3, 5, 7, 9 and 11).

When the molecular weight distribution (Mz/Mn) is smaller than 3.0, further, the molten resin deposits on the holder even when the intrinsic viscosity is within the above range. Therefore, the timing of fall varies and the molten resin mass is not favorably conveyed (Comparative Examples 4, 6 and 12). When the polyester resin contains the diethylene glycol in an amount of not smaller than 2.3 mol%, the molten resin thereof deposits on the holder despite the intrinsic viscosity and the molecular weight distribution thereof are within the above ranges, and is not favorably conveyed (Comparative Examples 1, 4, 6, 10 and 12).

It is further desired that the polyester resin for compression forming of the present invention contains the components of high molecular weights of not smaller than the inter-tangling-point molecular weight thereof in an amount of not smaller than 20% by weight so far as the above-mentioned features of the invention are exhibited. This enables the molten resin mass thereof to be more favorably conveyed.

As described above, the components that deposit and build up on the holder and throat which are means for conveying the molten resin mass and that hinder smooth falling of the molten resin mass, are the monomer components, oligomer components and high molecular components contained in the polyester resin. In particular, the oligomer components and the high molecular components become a direct cause of varying the timing of fall of the molten resin mass.

It has been known that the oligomer components in the polyester resin migrate into the heat-setting metal mold and build up therein at the time of heat-setting the polyester bottles and the like, and the deposit thereof decreases the luster on the bottle surfaces. In conducting the compression forming, however, the molten resin is conveyed. Therefore, the high molecular components undergo the migration in addition to the oligomer components.

In view of the above fact, the present inventors have conducted a keen study concerning the high molecular components that deposit on the holder and the throat, and have discovered that the high molecular components in the deposit are those high molecular components having weight average molecular weights of not larger than a inter-tangling-point polymerization degree of the polyester resin that is used.

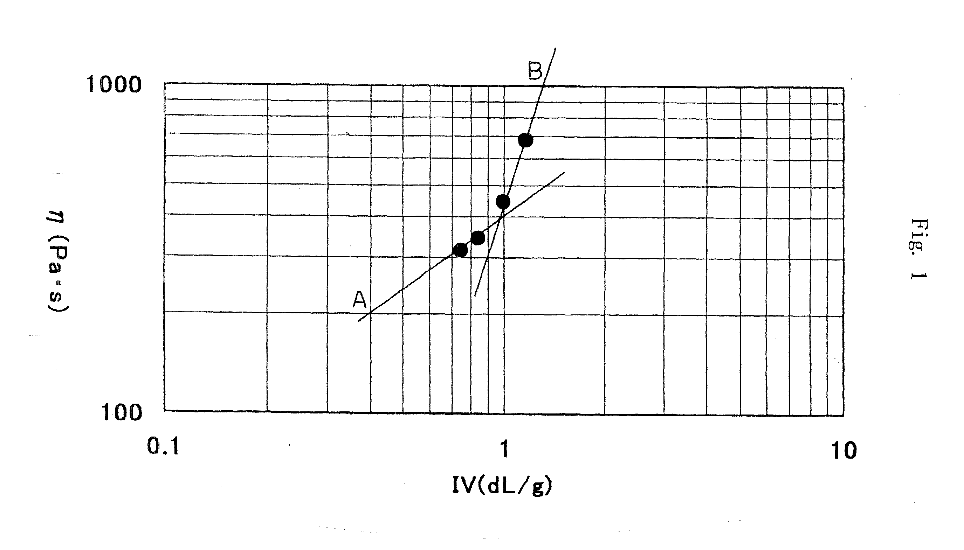

In general, the viscous behavior of a high molecular liquid drastically varies as a critical polymerization degree Ne (inter-tangling-point polymerization degree) is exceeded. When the polymerization degree N of high molecules is N < Ne, the melt viscosity η varies in proportion to the polymerization degree N. When N > Ne, however, the melt viscosity η varies in proportion to the third power of the polymerization degree N. This is obvious from Fig. 1 that illustrates relationships between the intrinsic viscosities and the melt viscosities of various polyester resins used in Examples appearing later. The viscosity sharply increases with the critical polymerization degree (intersecting point of lines A and B in Fig. 1) as a boundary.

In the present invention, it will be obvious from the results of Examples appearing later that the deposition on the holder and the like sharply decreases with the content of components of molecular weights smaller than the inter-tangling-point molecular weight of 80% by weight as a boundary. That is, by using the polyester resins having a molecular weight at the inter-tangling-point polymerization degree of 1.0 x 10⁵ and the same intrinsic viscosity, almost no deposit builds up on the holder and the throat even after the forming is continued for 2 hours and excellent results are obtained when the polyester resin contains the components of molecular weights of greater than the inter-tangling-point molecular weight in an amount of not smaller than 20% by weight (Example 4) as compared to when the polyester resin lying in the scope of this application is used (Example 9) in which the components of molecular weights greater than the inter-tangling-point polymerization degree are contained in an amount of smaller than 20% by weight.

It has further been known that the presence of a monomer component plays the role of depositing the oligomer components on the metal mold surfaces at the time of heat set. It is therefore considered that the high molecular components in the present invention, too, are deposited via the eluted monomer components and oligomer components. In fact, oligomer components are detected from the deposit on the holder and the like. In the present invention, therefore, it is desired that the low molecular components having weight average molecular weights in a range of 500 to 2000 that serve as a binder for depositing high molecular components, are contained in an amount of not larger than 1.1% by weight in the polyester resin.

By suppressing the amount of low molecular components to lie in a particular range as described above, it is allowed to suppress the deposition of low molecular components themselves due to elution as well as to suppress the deposition of high molecular components. Therefore, the deposit builds up little on the holder and the like, and the timing of fall of the molten resin mass can be maintained stable for extended periods of time. It is obvious from the results of Examples that when the content of low molecular components having weight average molecular weights in a range of 500 to 2000 exceeds 1.1% by weight in the polyester resin having a comparable intrinsic viscosity (Examples 6 and 7), the effect for suppressing the deposition becomes inferior to that of when the content of such low molecular components is not larger than 1.1% by weight (Examples 1 and 3).

According to the present invention, the polyester resin having the above-mentioned properties can be produced by melt-kneading a polyester resin A having an intrinsic viscosity of 0.60 to 0.79 dL/g and a molecular weight distribution (Mz/Mn) of 2.50 to 3.50 and a polyester resin B having an intrinsic viscosity of 0.80 to 1.30 dL/g and a molecular weight distribution (Mz/Mn) of 2.80 to 4.00 in such a combination that a difference in the intrinsic viscosity between the polyester resin A and the polyester resin B is not smaller than 0.15.

As described above, it is important that the polyester resin of the present invention satisfies all of that the intrinsic viscosity is 0.70 to 1.00 dL/g, the molecular weight distribution (Mz/Mn) is not smaller than 3.0, and the diethylene glycol content is not larger than 2.3 mol% from the standpoint of conveying the molten resin mass, formability and productivity. By using the polyester resin A having a low intrinsic viscosity and a molecular weight distribution (Mz/Mn) of 2.50 to 3.50 and the polyester resin B having a high intrinsic viscosity and a molecular weight distribution (Mz/Mn) of 2.80 to 4.00 in combination, it is allowed to easily prepare a polyester resin having a low intrinsic viscosity while containing much high molecular components.

In the method of producing the polyester resin of the present invention, it is important to use the polyester resin A and the polyester resin B in such a combination that a difference in the intrinsic viscosity therebetween is not smaller than 0.15. This makes it possible to prepare the polyester resin having the intrinsic viscosity and the molecular weight distribution lying in the above ranges. In general, the intrinsic viscosity has a correspondence to the molecular weight. When the polyester resin of a range of 0.70 to 1.00 dL/g specified by the present invention is prepared by an ordinary method of synthesizing the polyester resin, therefore, it is not easy to adjust the molecular weight distribution (Mz/Mn) specified by the present invention to be not smaller than 3.0. According to the above method, however, the polyester resin having the intrinsic viscosity and the molecular weight distribution specified by the present invention can be easily prepared.

This will become obvious from the results of Examples described later. That is, even when the intrinsic viscosity lies in the above range, it becomes difficult to adjust the molecular weight distribution of the obtained polyester resin to lie in the range of the present invention if the difference in the intrinsic viscosity between the polyester resin A and the polyester resin B is smaller than 0.15 (Comparable Examples 6 and 12).

The ratio of blending the polyester resin A and the polyester resin B differs depending upon the intrinsic viscosities and the molecular weight distributions of the polyester resins that are used and cannot be exclusively specified. It is, however, desired to use them at a weight ratio in a range of, particularly, 5:95 to 95:5.

### (Brief Description of the Drawings)

Fig. 1 is a diagram illustrating a relationship between the intrinsic viscosity and the melt viscosity of a polyester resin;
Fig. 2 is a view illustrating a forming apparatus used for a method of producing preforms of the present invention, and illustrates a forming system as a whole; and
Fig. 3 is a sectional view illustrating a portion X in Fig. 2 and is a partial sectional view showing a state where cutting/holding means is holding a molten resin mass in order to fall the molten resin mass.

### (Best Mode for Carrying Out the Invention)

### (Preparation of the polyester resin)

Though not limited thereto only, the polyester resin for compression forming of the present invention has an intrinsic viscosity of 0.70 to 1.00 dL/g, a molecular weight distribution (Mz/Mn) of not smaller than 3.0, and a diethylene glycol content of not larger than 2.3 mol%, and is preferably produced by melt-kneading a polyester resin A having an intrinsic viscosity of 0.60 to 0.79 dL/g and a molecular weight distribution (Mz/Mn) of 2.50 to 3.50 and a polyester resin B having an intrinsic viscosity of 0.80 to 1.30 dL/g and a molecular weight distribution (Mz/Mn) of 2.80 to 4.00 in such a combination that a difference in the intrinsic viscosity between the polyester resin A and the polyester resin B is not smaller than 0.15.

The inter-tangling-point polymerization degree is determined by a chemical structure of the polyester resin and cannot be exclusively specified. In the case of a homopolyethylene terephthalate, however, the viscosity abruptly varies with a weight average molecular weight of 1.0 x 10⁵ as a boundary. It is therefore desired that the polyester resin of the present invention contains the high molecular components having weight average molecular weights of not smaller than 1.0 x 10⁵ in an amount of not smaller than 20% by weight.

Though not limited thereto only, it is desired that the polyester resin of the present invention is the one obtained by liquid phase-polymerizing and solid phase-polymerizing a starting material in the presence of a catalyst, the starting material comprising chiefly a terephthalic acid or an ester-forming derivative thereof and an ethylene glycol or an ester-forming derivative thereof.

The polyester resin is usually synthesized by a method of synthesizing a polyethylene terephthalate (PET) by directly reacting a highly pure terephthalic acid (TPA) with an ethylene glycol (EG), which is usually divided into two steps, i.e., (A) a step of synthesizing a bis-β-hydroxyethyl terephthalate (BHET) or a low polycondensate thereof by reacting TPA with EG and (B) a step of polycondensation by distilling off ethylene glycol from the BHET or the low polycondensate thereof.

The BHET or the low polycondensate thereof can be synthesized under the conditions known per se. For example, the esterification is carried out by selecting the amount of EG to be 1.1 to 1.5 mol times relative to TPA, heating the system at not lower than a boiling point of EG, e.g., at a temperature of 220 to 260°C and distilling water off the system under a pressure of 1 to 5 kg/cm². In this case, the TPA itself serves as a catalyst. Usually, therefore, there is no need of using a catalyst. It is, further, allowable to use a known esterification catalyst.

In the polycondensation step of the second stage, the reaction is conducted by adding a known polycondensation catalyst to the BHET or the low polycondensate thereof obtained in the first stage, gradually reducing the pressure while maintaining the reaction system at 260 to 290°C, stirring the system under a pressure finally reduced down to 1 to 3 mmHg and distilling the formed EG off the system. The molecular weight is detected relying upon the viscosity of the reaction system. When a predetermined value is reached, the reaction product is blown out of the system and is cooled to obtain chips thereof. As the polycondensation catalyst, there can be used a germanium compound, a titanium compound or an antimony compound. It is, however, desired to use a germanium compound such as germanium dioxide, germanium tetraethoxide or germanium tetrabutoxide from the standpoint of maintaining the temperature zone for crystallization in the above-mentioned range.

To decrease the DEG content in the polyester resin of the invention, it is necessary to decrease the DEG content in the polyester resin A and in the polyester resin B. To decrease the DEG content, the reaction conditions and the additives must be suitably selected and controlled. As the additive to be used in this case, there can be exemplified a tertiary amine such as triethylamine or tri-n-butylamine, a quaternary ammonium such as tetraethylammonium hydroxide or tetrabutylammonium hydroxide, or a basic compound such as lithium carbonate or sodium carbonate. The amount of addition thereof is, desirably, in a range of 0.005 to 1% by weight.

In the polyester resin for compression forming of the present invention, most of the ester recurring units, usually, not less than 70 mol% thereof and, particularly, not less than 80 mol% thereof are occupied by ethylene terephthalate units and is, desirably, occupied by a thermoplastic polyester having a glass transition point (Tg) of 50 to 90°C, particularly, 55 to 80°C and having a melting point (Tm) of 200 to 275°C and, particularly, 220 to 270°C.

A homopolyethylene terephthalate is desired from the standpoint of heat resisting property but it is also allowable to use a copolymerized polyester containing ester units other than the ethylene terephthalate unit in small amounts. As the dibasic acid other than the terephthalic acid, there can be exemplified aromatic dicarboxylic acids such as isophthalic acid, phthalic acid and naphthalenedicarboxylic acid; alicyclic dicarboxylic acids such as cyclohexanedicarboxylic acid; aliphatic dicarboxylic acids such as succinic acid, adipic acid, sebacic acid and dodecanedioic acid, which can be used in one kind or in a combination of two or more kinds. As the diol components other than the ethylene glycol, there can be exemplified on or two or more of propylene glycol, 1,4-butanediol, diethylene glycol, 1,6-hexylene glycol, cyclohexane dimethanol and ethylene oxide adduct of bisphenol A.

As the polyester resin undergoes the crystallization, the low molecular components such as cyclic trimer and the like contained therein are expelled outward, and the content of the low molecular components decreases. From the standpoint of decreasing the content of the low molecular components, there is an optimum range for the crystallization temperatures, i.e., 100 to 150°C and, particularly, 120 to 140°C in the case of the homopolyethylene terephthalate. Further, the treating time is, preferably, 1 to 24 hours and, particularly, 2 to 20 hours. The heat treatment for crystallizing the polyester resin pellets can be carried out relying on the fluidized bed method or the fixed bed method using a heated inert gas such as heated nitrogen gas, or can be carried out in a vacuum heated furnace.

The polyester resin B used for the method of producing the polyester resin of the invention has an intrinsic viscosity higher than that of the polyester resin A, the intrinsic viscosity lying in a range of 0.80 to 1.30 dL/g. In order to obtain a desired intrinsic viscosity, as required, therefore, the pellets of the crystallized polyester resin may be obtained through the solid-phase polymerization.

In conducting the solid-phase polymerization, unlike the case of the melt polymerization, the low molecular components and the components having molecular weights lower than the inter-tangling-point polymerization degree decrease with an increase in the intrinsic viscosity. Generally, further, the contents of low molecular components and the components having molecular weights lower than the inter-tangling-point polymerization degree decrease with an increase in the solid-phase polymerization temperature, the contents of low molecular components and the components having molecular weights lower than the inter-tangling-point polymerization degree decrease with an increase in the polymerization time, and the molecular weight distribution (Mz/Mn) can be set to lie in a range of 3.0 to 3.5.

It is desired that the solid-phase polymerization is conducted, generally, at a temperature of 160 to 260°C and, particularly, 180 to 200°C for 2 to 10 hours and, particularly, 4 to 6 hours. The heating during the solid-phase polymerization may be the same as that of the case of crystallization but changing the temperature. During the solid-phase polymerization, too, the polyester resin undergoes the crystallization to some extent.

The thus obtained polyester resins A and B are blended at a weight ratio of, preferably, A:B = 5:95 to 95:5 and, particularly, 10:90 to 90:10, and are melt-kneaded together to obtain a polyester resin having an intrinsic viscosity of 0.70 to 1.00 dL/g, a molecular weight distribution (Mz/Mn) of not smaller than 3.0, and a diethylene glycol content of not larger than 2.3 mol%.

It is, generally, desired that the polyester resin A and the polyester resin B are melt-kneaded at a temperature of 200 to 300°C for 1 to 10 minutes while venting from the standpoint of preventing the resin from decomposing.

The polyester resin for compression forming of the present invention can be prepared by a method of using the above-mentioned polyester resins A and B in combination just prior to being subjected to the compression forming, by a method of feeding the obtained pellets again to an extruder for compression forming, or by an ordinary polymerization method of directly preparing a polyester resin having an intrinsic viscosity in a range of 0.70 to 1.00 and a molecular weight distribution (Mz/Mn) of not smaller than 3.0.

In general, a condensed polymer such as the polyester resin permits an ester-exchange reaction to take place at all times at a melting temperature and, therefore, assumes an optimum molecular weight distribution. To widen the molecular weight distribution (Mz/Mn) to be not smaller than 3.0, therefore, it is desired to employ means such as copolymerizing the polyol.

### (Method of producing preforms)

The preform of the present invention can be formed by a known compression forming method but using the polyester resin having an intrinsic viscosity in a range of 0.70 to 1.00 and a molecular weight distribution (Mz/Mn) of not smaller than 3.0, the molten resin mass thereof being fed to the compression forming machine as described above.

By using the above polyester resin, the molten resin mass thereof does not deposit and build up on the conveyer means such as the holder and the throat of the feeding device that feeds the molten resin mass to the compression forming machine even after the operation is continued for extended periods of time. Therefore, the conveyer means does not need to be frequently cleaned, and the preforms can be efficiently produced.

Besides, the polyester resin has the intrinsic viscosity in a range of 0.70 to 1.00 dL/g. Therefore, the resin can be favorably fluidized, and can be blown out in increased amounts from the extruder without causing the torque of the extruder to excessively increase. Accordingly, the preforms can be produced maintaining good productivity. When compression formed in the compression forming mold, too, the polyester resin smoothly flows in the forming mold effectively suppressing the occurrence of wrinkles, shades or forming distortion, offering an advantage in that the compression forming can be conducted maintaining good formability.

In the method of producing the preform of the present invention, with the melting point (Tm) of the polyester resin as a reference, it is desired that the temperature for melt-extruding the molten polyester resin is in a range of Tm + 5°C to Tm + 40°C and, particularly, Tm + 10°C to Tm + 30°C from the standpoint of forming a uniformly melt-extruded product and of preventing the thermal aging of the resin and the draw-down.

It is, further, desired that the molten resin is kneaded in the extruder, particularly, while venting. This suppresses the elution of oligomer components and the components of molecular weights lower than the inter-tangling-point polymerization degree, suppresses the stickiness of the melt-extruded product, and prevents the melt-extruded product from depositing on the holder and on the throat.

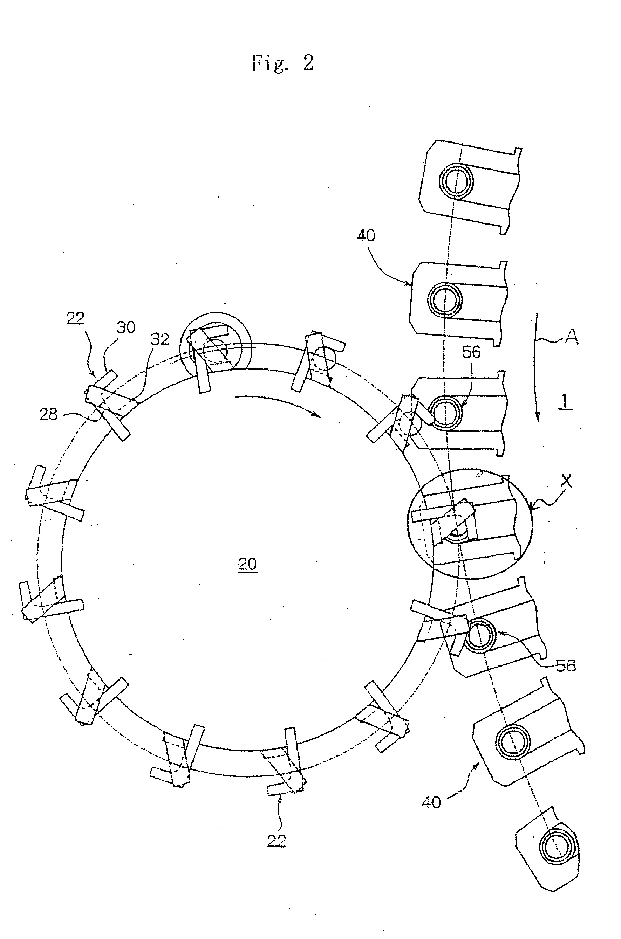

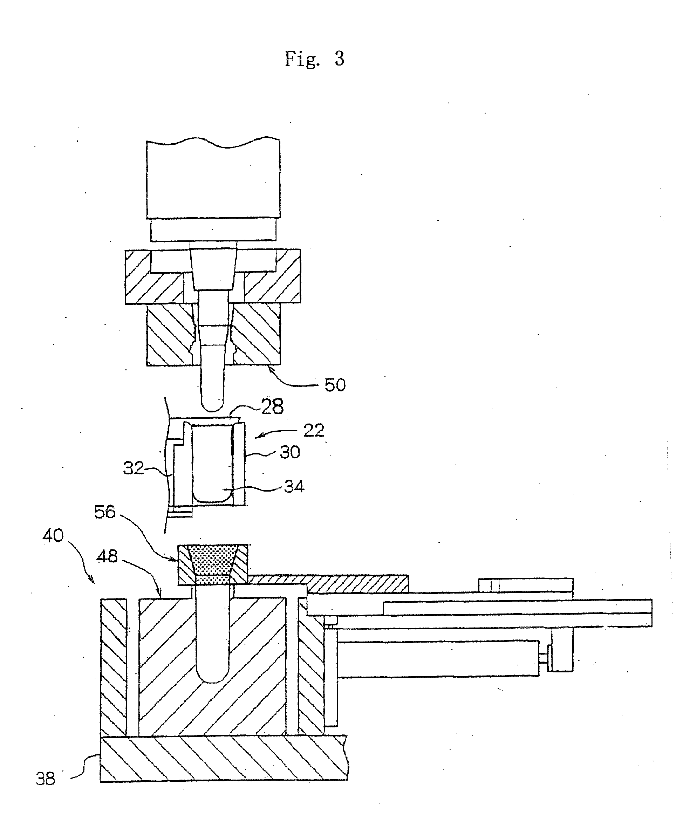

Figs. 2 and 3 are views illustrating a forming apparatus for forming preforms by using the polyester resin for compression forming of the present invention, wherein Fig. 2 is a view illustrating a forming system as a whole, and Fig. 3 is a sectional view illustrating a portion X in Fig. 2 and is a partial sectional view showing a state where cutting/holding means is holding a molten resin mass in order to fall the molten resin mass.

The compression forming apparatus generally designated at 1 includes a rotary disk 38 of a relatively large diameter that rotates in a direction indicated by an arrow A. A plurality of forming molds 40 are arranged along the circumferential edge of the rotary disk 38 maintaining an equal distance in the circumferential direction. Each forming mold 40 comprises a female mold 48 and a male mold 50. When the forming mold 40 is brought to a position of feeding the molten resin mass, the male mold moves up to an opening position, and a molten resin mass 34 is fed into the female mold 48 from a cutting/holding mechanism 22 of a rigid resin feeding device 20. When the forming mold 40 is brought to a forming zone, the male mold 50 moves down to a closing position, and the molten resin mass 34 is compression formed into a preform of a desired shape due to the cooperation of the female mold 48 and the male mold 50. As the forming mold 40 arrives at a delivery position, the male mold moves up to the opening position where the preform that is formed is taken out.

If described in further detail, the molten resin mass 34 obtained by cutting a strand extruded from the extruder by cutting means 28 is held by cutting/holding means which comprises a holder 30 and a pusher 32. As the forming mold 40 arrives at a feeding position, the pusher 32 moves and the molten resin mass 34 falls down. The female mold 48 is provided with a throat 56, and the molten resin mass 34 is stably fed into the female mold 48 via the throat 56. In the present invention, the oligomer components and high molecular components in the molten resin mass deposit in suppressed amounts on the holder and on the throat. Therefore, the timing of fall of the molten resin mass remains constant, and the molten resin mass can be fed into the forming mold maintaining stability for extended periods of time.

As will become obvious from Examples appearing later, the preform formed by using the polyester resin for compression forming of the present invention has an intrinsic viscosity of 0.65 to 0.80 dL/g, a molecular weight distribution (Mz/Mn) of not smaller than 3.0, a DEG content of not larger than 2.3% by weight, and contains the components of molecular weights of not lower than the inter-tangling-point polymerization degree in an amount of not smaller than 5% by weight.

The preform formed by using the polyester resin for compression forming of the present invention is draw-blow-formed into a draw-formed container such as a bottle or a wide-mouthed cup.

In conducting the draw-blow forming, the preform formed by using the polyester resin for compression forming of the invention is heated at a drawing temperature, and is drawn in the axial direction while being biaxially draw-blow-formed in the circumferential direction to thereby produce a biaxially drawn container.

Forming the preform and draw-blow forming thereof can be applied to the cold parison system as well as to the hot parison system which effects the draw-blow forming without completely cooling the preform.

Prior to the draw-blowing, as required, the preform is pre-heated up to a temperature adapted to the drawing by such means as hot air, infrared ray heater or high-frequency induction heating. The temperature range is, in the case of the polyester, 85 to 120°C and, particularly, 95 to 110°C.

The preform is fed into a known draw-blow forming machine, is set to a metal mold, is pull-drawn in the axial direction by pushing a drawing rod therein, and is draw-formed in the circumferential direction by blowing a fluid therein. The metal mold temperature is usually in a range of room temperature to 190°C. When the heat setting is effected by the one-mold method, it is desired to set the metal mold temperature to be 120 to 180°C as will be described later.

The drawing ratio in the finally obtained polyester container is, preferably, 1.5 to 25 times in terms of the area ratio and it is particularly desired to set the drawing ratio to be 1.2 to 6 times in the axial direction and to be 1.2 to 4.5 times in the circumferential direction.

The polyester container of the present invention can be heat-set by any known means. The heat-setting can be conducted by a one-mold method in a blow-forming metal mold or by a two-mold method in a metal mold for heat-setting separate from the blow-forming metal mold. The heat-setting temperature is preferably in a range of 120 to 180°C.

As another draw-blow forming method, a two-stage blow-forming method may be employed according to which the preform is obtained as a primary blow-formed article of a size larger than the finally formed article by using a primary blow metal mold, the primary blow-formed article is thermally shrunk and is draw-blow formed by using a secondary blow metal mold to obtain a finally formed article as taught in Japanese Patent No. 2,917,851 of the present applicant.

### (Examples)

### I. Measurement.

1. Intrinsic viscosity.
   Pellets of a polyethylene terephthalate resin dried at 150°C for 4 hours, and pellets of a blend of the polyester A and the polyester B at a predetermined ratio or a sample cut out from a formed preform, were weighed to be 0.20 g, and were completely dissolved in 20 ml of a mixed solvent of 1,1,2,2-tetrachloroethane/phenol (1/1)(weight ratio) at 120°C with stirring for 20 minutes. After dissolved, the solution was cooled down to room temperature, passed through a glass filter, and was measured for its intrinsic viscosity by using Ubbelohde's viscometer (manufactured by Kusano Kagaku Kikai Mfg. Co.) of which the temperature was adjusted to 30°C.
2. DEG. amount.
   Pellets of a polyethylene terephthalate resin dried at 150°C for 4 hours, and pellets of a blend of the polyester A and the polyester B at a predetermined ratio or a sample cut out from a formed preform, were dissolved in a mixed solvent trifluorobiacetate/bichloroform (1/1)(weight ratio), and were measured for the 1H-NMR spectra by using an NMR apparatus (EX270, manufactured by Nihon Denshi Datum Co.). From the obtained spectra, the content of DEG was calculated relying upon a ratio of integrated values of peaks stemming from the DEG portion (4.27 ppm) and the terephthalic acid portion (8.22 ppm).
3. Measurement of weight average molecular weight and molecular weight distribution.
   5 mg of a polyester resin sample was accurately weighed and was dissolved in a mixed solvent of chloroform (for high-speed liquid chromatography, manufactured by Kishida Co.) and 1,1,1,3,3,3-hexafluoro-2-propanol (manufactured by Central Glass Co.) at a weight ratio of 50:50. From this solution, a weight average molecular weight Mw was found relying on a gel permeation chromatography (system: Integrated system for GPC/SEC manufactured by Asahi Techneion Co., column: TSK G5000HHR + 4000HHR, detector: Triple detector module TriSEC, Model 302, manufactured by VISCOTEC Co., eluent: chloroform, amount injected: 100 µL).
   Further, a molecular weight distribution (Mz/Mn) was found from the similarly obtained number average molecular weight Mn and the z-average molecular weight Mz.
   Here, the z-average molecular weight Mz stands for an average molecular weight given by ΣWiMi²/WiMi, where Wi is a weight of a molecular species and Mi is a molecular weight.
4. Content of components of molecular weights smaller than an inter-tangling-point molecular weight.
   (1) First, four kinds of polyethylene terephthalate resins of the same composition but having different molecular weights were measured for their intrinsic viscosities based on the above method. Next, by using a capillograph (manufactured by Toyo Seiki Co.), the polyethylene terephthalate resins were measured for their rates of distortion 608 (1/sec) and melting viscosities at a temperature of 270°C. The obtained melt viscosities were plotted against the intrinsic viscosities (Fig. 1), and an intrinsic viscosity with which the tangling starts was found from a point at where the gradient changes.
   (2) Pelletized pieces of 3 mg of the polyethylene terephthalate resin were completely dissolved in a mixed solvent of 1,1,1,3,3,3-hexafluoro-2-propanol and chloroform. From this solution, a calibration curve of intrinsic viscosities and molecular weights was found by using a gel permeation chromatography (GPC: Integrated system for GPC/SEC, manufactured by Asahi Techneion Co., Triple detector module TriSEC, Model 302, manufactured by Viscotek Co.) equipped with such detectors as a light-scattering photometer, a differential refractometer and a differential pressure viscosity detector.
   (3) A molecular weight with which the tangling takes place in the polyethylene terephthalate resin was calculated, i.e., an inter-tangling-point molecular weight was calculated from the intrinsic viscosity with which the entangling takes place as found in (1) above and from the calibration curve of intrinsic viscosities and molecular weights as found in (2) above.
   (4) By using the same gel permeation chromatography as that of (2) above, an integration curve of molecular weight distributions of polyethylene terephthalate resin samples used for the forming was found, and the content of components of molecular weights smaller than the inter-tangling-point molecular weight was calculated.
5. Content of components of molecular weights of 500 to 2000.
   The content of components having weight average molecular weights of 500 to 2000 was found from the integration curve of molecular weight distributions measured by using the above gel permeation chromatography.

### II. Evaluation.

1. Deposition on the holder and throat.
   Pellets of the PET resin dried at 150°C for not shorter than 4 hours were extruded at 270°C and were continuously compression formed. Two hours after the start of forming, the holder and throat of the synthetic resin feeding device were removed and were washed twice with 10 ml of the above mixed solvent to pick up the additive. The solution was evaporated, dried, solidified, and to which the same mixed solvent was added so that the volume was 2.5 ml. By using the gel permeation chromatography, again, it was confirmed whether the high molecular components and low molecular components were contained. The evaluation was conducted on the following basis.
   ○: High molecular components and low molecular components deposited in trace amounts but the timing was not affected.
   △: High molecular components and low molecular components deposited in very small amounts but the timing was not affected.
   ×: High molecular components and low molecular components deposited and the timing has varied.
2. Variation in the timing of fall of the molten resin mass.
   As the amount of deposition increases, the molten resin mass does not easily separate away from the holder, and it becomes difficult to hold the molten resin mass in the cavity maintaining its attitude. Pellets of the PET resin dried at 150°C for not shorter than 4 hours were extruded at 270°C and were continuously compression formed. Two hours after the start of forming, this was observed by eyes to evaluate variation in the timing. The evaluation was conducted on the following basis.
   ○: No variation in the timing.
   △: Timing has varied to a small degree, but the molten resin mass was held in the cavity.
   ×: Timing has so varied that the molten resin mass could not be held in the cavity.
3. Draw-down.
   Pellets of the PET resin dried at 150°C for not shorter than 4 hours were extruded at 270°C and were continuously compression formed. Two hours after the start of forming, this was observed by eyes to evaluate variation in the timing.
   ○: No draw-down.
   △: Drawn down to a small degree, but the timing was not affected.
   ×: Drawn down to such a degree that the timing was greatly affected.
4. Evaluation of the shaping.
   Pellets of the PET resin dried at 150°C for not shorter than 4 hours were extruded at 270°C and were continuously compression formed. Two hours after the start of forming, shaping of the preforms were evaluated by eyes. The evaluation was conducted on the following basis.
   ○: Preform was not wrinkled or shaded.
   △: A close observation shows wrinkles and shades on the preform.
   ×: The preform exhibited wrinkles and shades to a conspicuous degree.

### (Example 1)

A PET resin A having an intrinsic viscosity of 0.62 dL/g and a molecular weight distribution (Mz/Mn) of 3.17, and a PET resin B having an intrinsic viscosity of 1.16 dL/g and a molecular weight distribution (Mz/Mn) of 2.93 were dried at 150°C for 4 hours. Thereafter, the PET resin A and the PET resin B were dry-blended at a ratio of 70:30. The blended resin was melt-kneaded by using a biaxial extruder and was melt-extruded at an extrusion temperature of 270°C. By using a melt resin feeding device shown in Figs. 2 and 3, molten resin masses each in an amount of 25 g were fed to the compression forming machine at a rate of 200 masses a minute to continuously form preforms for 2 hours while observing deposition on the holder and on the throat, variation in the timing of fall of the molten resin mass, draw-down and shaping.

Further, the blended resin and the preform were measured for their intrinsic viscosities, molecular weight distributions (Mz/Mn), DEG contents, contents (% by weight) of the components having molecular weights of not smaller than the inter-tangling-point polymerization degree and contents (% by weight) of the components having molecular weights of 500 to 2000. The results were as shown in Tables 1 and 2.

### (Examples 2 to 9)

Preforms were formed in the same manner as in Example 1 but varying the polyester resins A and B or the blending ratio thereof. The blended resins and the preforms were measured for their intrinsic viscosities, molecular weight distributions (Mz/Mn), DEG contents, contents (% by weight) of the components having molecular weights of not smaller than the inter-tangling-point polymerization degree and contents (% by weight) of the components having molecular weights of 500 to 2000 in the same manner as in Example 1. The results were as shown in Tables 1 and 2.

### (Comparative Examples 1 to 3)

Preforms were formed in the same manner as in Example 1 but using only those resins shown in Table 1 as polyester resins. The resins and the preforms were measured for their intrinsic viscosities, molecular weight distributions (Mz/Mn), DEG contents, contents (% by weight) of the components having molecular weights of not smaller than the inter-tangling-point polymerization degree and contents (% by weight) of the components having molecular weights of 500 to 2000 in the same manner as in Example 1. The results were as shown in Tables 1 and 2.

### (Comparative Examples 4 to 12)

Preforms were formed in the same manner as in Example 1 but varying the intrinsic viscosities of the polyester resins A and B, molecular weight distributions thereof and the blending ratios thereof. The blended resins and the preforms were measured for their intrinsic viscosities, molecular weight distributions (Mz/Mn), DEG contents, contents (% by weight) of the components having molecular weights of not smaller than the inter-tangling-point polymerization degree and contents (% by weight) of the components having molecular weights of 500 to 2000 in the same manner as in Example 1. The results were as shown in Tables 1 and 2.

**Table 1**

| | Intrinsic viscosity weight content (dl/g) | Molecular distribution (Mz/Mn) | DEG content (mol%) | Components of molecular weight larger than intertangling-point mol.wt. (wt.%) | Components of molecular weight of 500-2000 (wt%) | Deposition on the holder and throat | Variation of timing of all molten mass | Draw- down | Shaping |
|---|---|---|---|---|---|---|---|---|---|
| Example 1 | 0.79 | 3.59 | 2.2 | 25 | 1.1 | ○ | ○ | ○ | ○ |
| Example 2 | 0.96 | 3.47 | 2.2 | 29 | 1.0 | ○ | ○ | ○ | ○ |
| Example 3 | 0.77 | 3.54 | 2.2 | 22 | 0.95 | ○ | ○ | ○ | ○ |
| Example 4 | 0.82 | 3.58 | 2.1 | 27 | 0.98 | ○ | ○ | ○ | ○ |
| Example 5 | 0.75 | 3.20 | 2.0 | 20 | 0.92 | △ | △ | △ | ○ |
| Example 6 | 0.74 | 3.10 | 1.9 | 21 | 1.2 | △ | △ | △ | ○ |
| Example 7 | 0.78 | 3.50 | 1. 9 | 21 | 1.15 | △ | △ | △ | ○ |
| Example 8 | 0.98 | 3.60 | 2.1 | 21 | 0.98 | ○ | ○ | ○ | △ |
| Example 9 | 0.83 | 3.63 | 2.1 | 19 | 1.1 | △ | △ | ○ | ○ |
| Comp.Ex.1 | 0.74 | 3.19 | 2.7 | 19 | 1.0 | × | × | ○ | ○ |
| Comp.Ex.2 | 0.62 | 3.17 | 2.6 | 8 | 1.1 | × | × | × | ○ |
| Comp.Ex.3 | 1.16 | 2.93 | 2.6 | 37 | 0.9 | ○ | ○ | ○ | × |
| Comp.Ex.4 | 0.73 | 2.95 | 2.5 | 10 | 1.3 | × | × | × | ○ |
| Comp.Ex.5 | 1.10 | 3.65 | 2.0 | 31 | 1.1 | ○ | ○ | ○ | × |
| Comp.Ex.6 | 0.74 | 2.90 | 2.4 | 19 | 1.3 | × | × | × | ○ |
| Conp.Ex.7 | 1.18 | 3.85 | 2.1 | 37 | 0.9 | ○ | ○ | ○ | × |
| Comp.Ex.8 | 0.69 | 3.70 | 2.3 | 11 | 1.3 | × | × | × | ○ |
| Comp.Ex.9 | 1.12 | 2.88 | 2.0 | 33 | 1.2 | × | △ | ○ | × |
| Comp.Ex.10 | 0.74 | 3.40 | 2.4 | 17 | 1.3 | × | × | × | ○ |
| Comp.Ex.11 | 1.22 | 2.9 | 2.2 | 39 | 1.0 | ○ | ○ | ○ | × |
| Comp.Ex.12 | 0.88 | 2.97 | 2.5 | 27 | 1.1 | × | × | ○ | ○ |

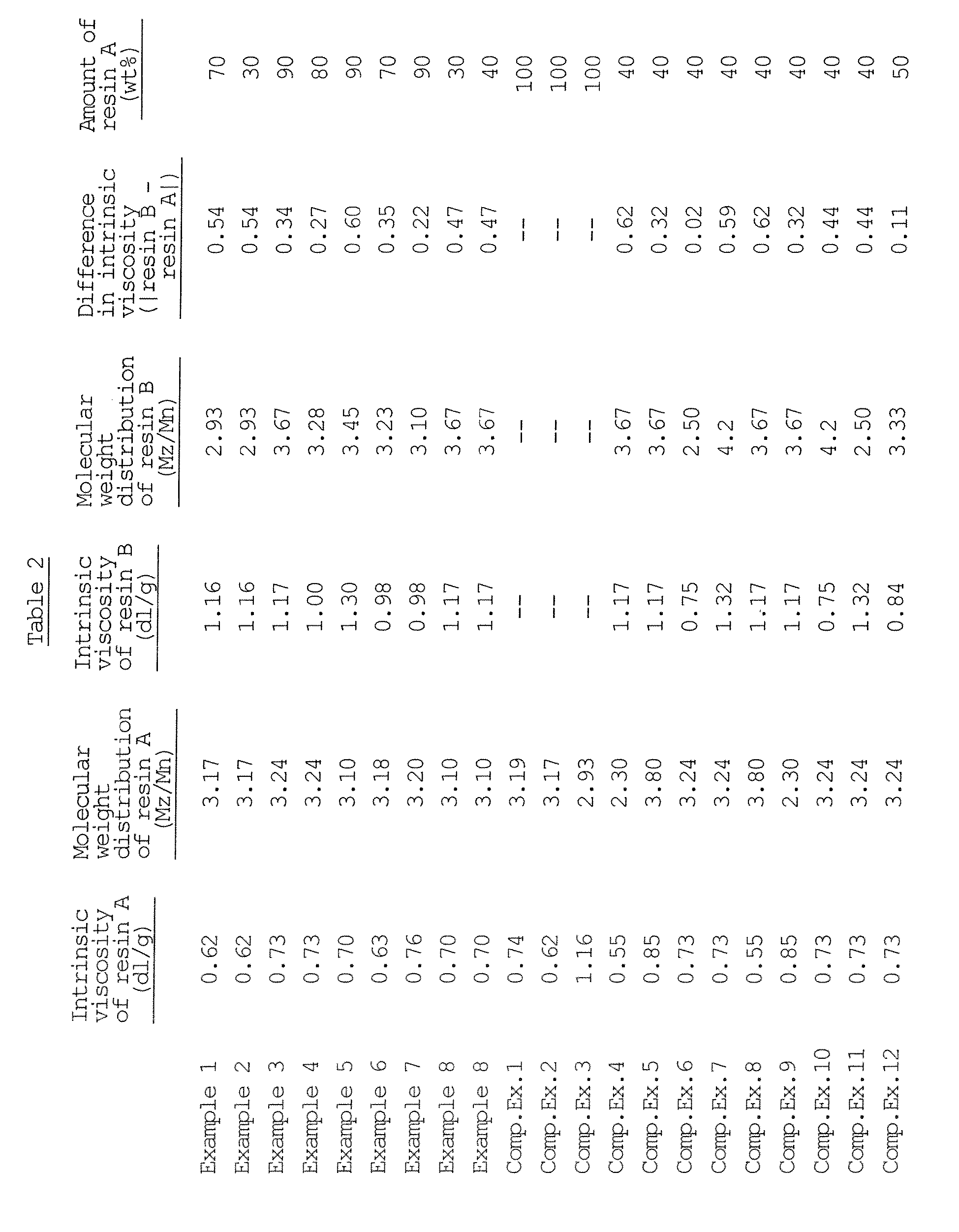

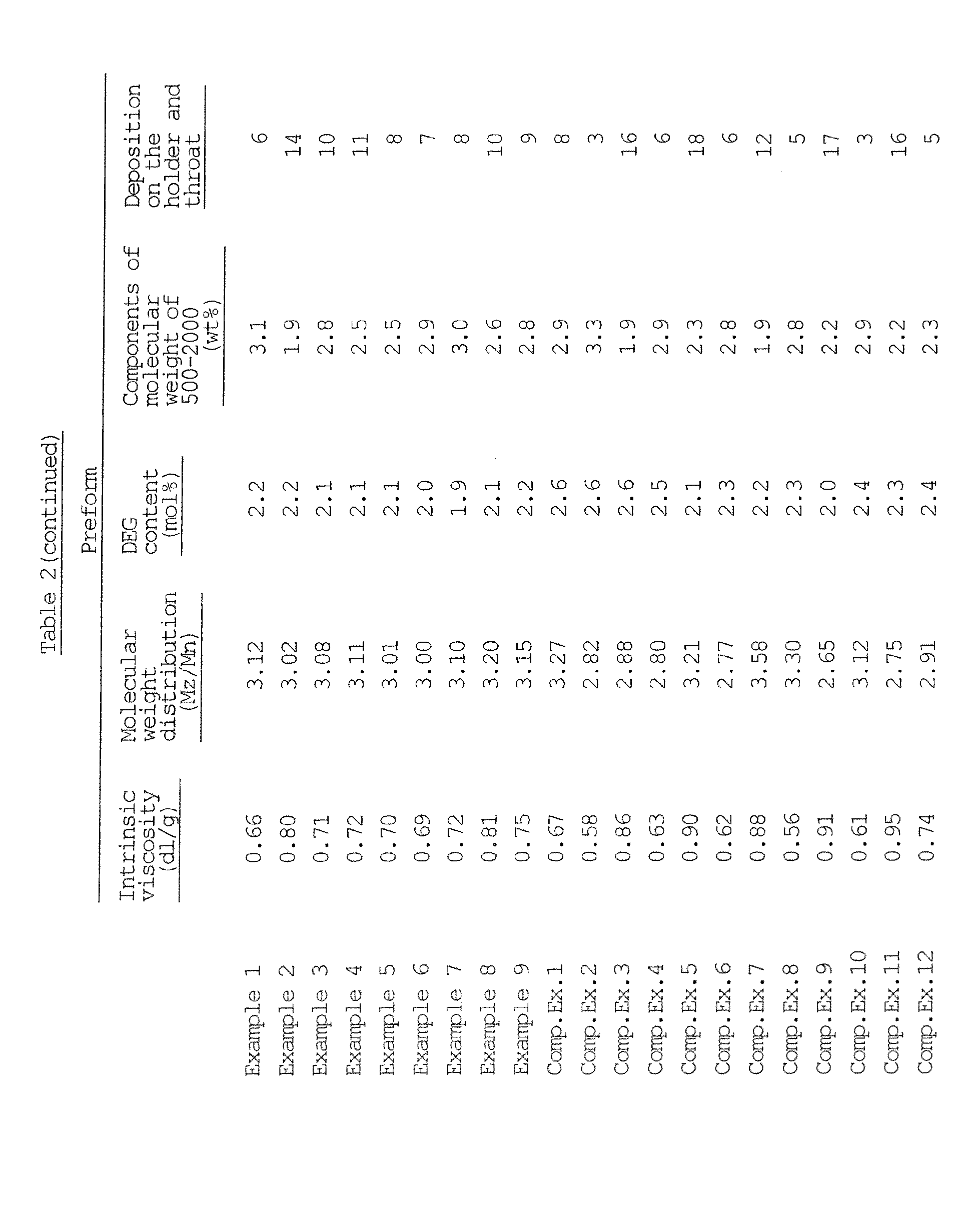

## Claims

1. A polyester resin for compression forming having an intrinsic viscosity of 0.70 to 1.00 dL/g, a molecular weight distribution (Mz/Mn) of not smaller than 3.0, and a diethylene glycol content of not larger than 2.3 mol%.

2. A polyester resin for compression forming according to claim 1, wherein the components of molecular weights of not smaller than an inter-tangling-point polymerization degree are contained in an amount of not smaller than 20% by weight.

3. A polyester resin for compression forming according to claim 1, wherein the low molecular components having weight average molecular weights of 500 to 2000 are contained in the polyester resin in an amount of not larger than 1.1% by weight.

4. A method of producing a polyester resin for compression forming, comprising melt-kneading a polyester A having an intrinsic viscosity of 0.60 to 0.79 dL/g and a molecular weight distribution (Mz/Mn) of 2.50 to 3.50 and a polyester resin B having an intrinsic viscosity of 0.80 to 1.30 dL/g and a molecular weight distribution (Mz/Mn) of 2.80 to 4.00 in such a combination that a difference in the intrinsic viscosity between the polyester resin A and the polyester resin B is not smaller than 0.15.

5. A method of producing a polyester resin for compression forming according to claim 4, wherein said polyester resin A and said polyester resin B are used at a weight ratio of 5:95 to 95:5.

6. A method of producing a preform by compression-forming a molten resin mass of a polyester resin obtained by melt-kneading a polyester A having an intrinsic viscosity of 0.60 to 0.79 dL/g and a molecular weight distribution (Mz/Mn) of 2.50 to 3.50 and a polyester resin B having an intrinsic viscosity of 0.80 to 1.30 dL/g and a molecular weight distribution (Mz/Mn) of 2.80 to 4.00 in such a combination that a difference in the intrinsic viscosity between the polyester resin A and the polyester resin B is not smaller than 0.15.
